Europäisches Patentamt

(19) European Patent Office

Office européen des brevets

(11) Veröffentlichungsnummer: **0 164 082**
A2

(12) # EUROPÄISCHE PATENTANMELDUNG

(21) Anmeldenummer: 85106726.4

(51) Int. Cl.⁴: **B 29 C 45/14**

(22) Anmeldetag: 31.05.85

(30) Priorität: **05.06.84 DE 3420848**

(71) Anmelder: **Gebr. Happich GmbH,
Postfach 10 02 49 Clausenbrücke 1,
D-5600 Wuppertal 1 (DE)**

(43) Veröffentlichungstag der Anmeldung: **11.12.85
Patentblatt 85/50**

(84) Benannte Vertragsstaaten: **DE FR GB IT SE**

(72) Erfinder: **Thiel, Manfred, Fahrenbecke 18 c,
D-5800 Hagen (DE)**

(54) Verfahren und Vorrichtung zum Anbringen von Endstücken an Kunststoff-Profilleisten.

(57) Es wird ein Verfahren zum Anbringen von Endstücken an Kunststoff-Profilleisten mit mindestens einer in Profillängsrichtung durchlaufenden Hohlkammer beschrieben, bei dem die Endstücke an die Profilleistenenden innerhalb einer die Endbereiche der Profilleisten aufnehmenden Kunststoff-Spritzgussform nach dem Verschliessen der Hohlkammer durch ein in der Spritzgussform angeordnetes Verschlusselement durch Spritzgiessen angeformt werden.

EP 0 164 082 A2

- 1 -

H 1063                                    01.06.1984 Pom/Eng.

GEBR. HAPPICH GMBH, D- 5600 WUPPERTAL
Bundesrepublik Deutschland

<u>Verfahren und Vorrichtung zum Anbringen von</u>
<u>Endstücken an Kunststoff-Profilleisten</u>

Die Erfindung bezieht sich auf ein Verfahren zum Anbringen von Endstücken an Kunststoff-Profilleisten mit mindestens einer in Profillängsrichtung durchlaufenden Hohlkammer, bei dem die Endstücke an die Profilleistenenden innerhalb einer die Endbereiche der Profilleisten aufnehmenden Kunststoff-Spritzgußform nach dem endseitigen Verschließen der Hohlkammer durch Spritzgießen angeformt werden. Die Erfindung bezieht sich weiterhin auf eine Vorrichtung zum Durchführen des Verfahrens, bestehend aus einer Spritzgußform mit zwei Formhälften, zwischen denen ein Klemmhohlraum zum Einspannen des Endbereichs einer Hohlprofilleiste und ein Formnest zum Anspritzen eines Endstücks an ein freies Leistenende ausgearbeitet sind.

Kunststoff-Profilleisten werden insbesondere als Fahrzeugausrüstungsteile eingesetzt und dienen als Zier-, Scheuer- und Pufferleisten. Die Kunststoff-Profilleisten werden in der Regel durch Extrusion hergestellt und sie erhalten im allgemeinen beidendig ein Endstück, insbesondere dann, wenn es sich um die hier angesprochenen Profilleisten handelt, die mit zumindest einer in Profillängsrichtung durchlaufenden Hohlkammer ausgebildet sind. Es ist bekannt (vgl. z.B. die DE-OSen 17 55 596 und 19 50 412) Endstücke durch Spritzgießen separat herzustellen und diese mit den Profilleisten durch Kleben, Schweißen, Klipsen, Verschrauben usw. zu verbinden, was aber wegen der zusätzlichen Arbeitsschritte sehr aufwendig ist und wegen sichtbarer Trennähte den optischen Gesamteindruck der Profilleisten schmälert. In der DE-OS 17 55 596 ist auch die Möglichkeit erwähnt, die Endstücke unmittelbar an die Profilleistenenden anzuspritzen. Diese Möglichkeit bietet sich bei massiv ausgebildeten Profilleisten zwar an, bereitet aber bei Profilleisten mit durchlaufender Hohlkammer erhebliche Schwierigkeiten und Kosten. In der Praxis wird z.Zt. so verfahren, daß zunächst im separaten Spritzgußverfahren mit einendigen Kragen versehene Stopfen hergestellt, die Stopfen in die Hohlkammerenden der Profilleisten eingesteckt und sodann innerhalb einer die Endbereiche der Profilleisten aufnehmenden Spritzgußform die Endstücke an die Profilleistenenden angespritzt werden. Dieses Herstellungsverfahren ist in verschiedener Hinsicht nicht von Nachteilen frei. Dabei ist zunächst die mit Zusatzkosten verbundene separate Herstellung und Montage der Stopfen hervorzuheben. Weiterhin ist die Anordnung des sich gegen das Profilleistenende abstützenden Kragens der Stopfen insbesondere dann problematisch, wenn die Profilleisten mit relativ geringen Wanddicken ausgebildet sind, weil dann wegen des Kragens die Verbindungsfläche zwischen den Profilleistenenden und den Endstücken für einen sicheren Verbund zu klein werden kann. Ein weiterer wesentlicher Nachteil des z.Zt. durchgeführten Verfahrens besteht darin, daß der volle Spritzdruck sowohl gegen den Stopfen als auch gegen den Stirnflächenbereich der Profilleisten beim Anformen der Endstücke zur Wirkung gelangt. Dieser Spritzdruck muß nun aber mit Rücksicht darauf, daß einerseits eine axiale Verschiebung der Profilleisten beim Anspritzen der Endstücke nicht in Kauf genommen, andererseits eine Hohlkammerprofilleiste nicht sonderlich stark eingeklemmt werden kann, in sehr niedrigen Grenzen gehalten werden. Dieser Umstand bedeutet aber, daß die Endstücke nicht die in das Formnest eingearbeitete Oberflächenstruktur annehmen können, so daß zwischen den Profilleisten und den Endstücken im allgemeinen Unterschiede im Glanzgrad bestehen, d.h. die Endstücke sind meistens glänzender als die den gewollten Matteffekt aufweisenden Profilleisten, was aber höchst unerwünscnt ist.

Der vorliegenden Erfindung liegt hiernach die Aufgabe zugrunde ein Verfahren zum Anbringen von Endstücken an Kunststoff-Profilleisten mit mindestens einer in Profillängsrichtung durchlaufenden Hohlkammer aufzuzeigen, mit dem bei vergleichsweise geringen Kosten eine wesentlich verbesserte Oberflächenqualität erzielt werden soll. Ferner ist es Aufgabe der Erfindung eine Vorrichtung zum Durchführen des Verfahrens zu schaffen.

Das zur Lösung der vorstehend umrissenen Aufgabe erfindungsgemäß vorgesehene Verfahren zeichnet sich dadurch aus, daß die Profilleisten mit offener Hohlkammer in die Spritzgußform bis zum Anschlag ihrer Stirnenden an ein in der Spritzgußform angeordnetes Verschlußelement für die Hohlkammer eingeschoben und hiernach an die Stirnenden der Profilleisten die Endstücke angespritzt werden.

Durch diese erfindungsgemäße Maßnahme wird zunächst die separate Herstellung und Montage von Stopfen eingespart und damit eine Kostenreduzierung erzielt. Weiterhin wirkt wegen des Verschlußelements der Spritzdruck nun nicht mehr auf den gesamten Profilleistenquerschnitt, was eine Erhöhung des Spritzdrucks bei unveränderter Klemmkraft auf die Profilleisten und damit eine Qualitätsverbesserung ermöglicht.

Das erfindungsgemäße Verfahren läßt sich dadurch vervollkommnen, daß die die Hohlkammer umschließende Wandung an den Endbereichen der Profilleisten vor dem Einschieben derselben in die Spritzgußform von der Rückseite der Profilleisten her in einer der Hohlkammer entsprechenden Breite ausgeklinkt wird und daß ein Verschlußelement verwendet wird, dessen Querschnitt dem durch die Hohlkammer und die Ausklinkung gebildeten Öffnungsquerschnitt der Profilleisten entspricht.

Durch diese Maßnahme kann die Hohlkammer der Profilleiste in einfacher Weise über das Verschlußelement geschoben werden, so daß das Verschlußelement nach Art eines Stopfens in der Hohlkammer und der Ausklinkung sitzt. Nach dem Anformen des Endstücks an die Profilleiste und dem Öffnen der Spritzguß-

- 4 -

form kann die Profilleiste wegen der Ausklinkung behinderungsfrei vom Verschlußelement abgehoben werden.

Vorzugsweise ist weiterhin vorgesehen, daß die Ausklinkung
an der Profilleistenrückseite derart weit in axialer Richtung vorgenommen wird, daß das Verschlußelement darin eine
gegenüber dem jeweiligen Stirnende der Leisten geringfügig
nach innen versetzte Aufnahme findet. Auf diese Weise wird
eine besonders große Fläche für die Anbindung der Endstücke
an die Profilleistenenden erzielt.

Von ganz besonderem Vorteil ist es, wenn die die Hohlkammer
umschließende Wandung jeder Leiste gegen das im Leistenendbereich angeordnete Verschlußelement gepreßt und hiernach
erst das Endstück angespritzt wird. Hierdurch wird ermöglicht,
auf die Profilleiste eine relativ große Klemmkraft und damit
Haltekraft gegen axiales Verschieben auszuüben mit der vorteilhaften Folge, auch den Spritzdruck beim Anspritzen der
Endstücke beträchtlich erhöhen zu können, woraus wiederum
eine Qualitätsverbesserung hinsichtlich der Oberflächenbeschaffenheit der Endstücke resultiert.

Die zur Durchführung des Verfahrens vorgesehene Vorrichtung
der eingangs näher erwähnten Art zeichnet sich erfindungsgemäß dadurch aus, daß zwischen dem Klemmhohlraum und dem
Formnest ein Formkernstück angeordnet ist, welches einen
Anschlag für das Leistenende und gleichzeitig ein Verschlußelement für die Hohlkammer der Hohlprofilleiste bildet. Vorzugsweise weist das Formkernstück die Hohlkammer am Hohlprofilleistenende und den dort ausgeklinkten Wandungsbereich
ausfüllende Abmessungen auf.

Die Erfindung wird im folgenden anhand der Zeichnung näher
erläutert. Es zeigen:

Fig. 1 eine Profilleiste mit einem daran durch strichpunktierte Linien angedeuteten Endstück,

Fig. 2 einen Schnitt II-II nach Fig. 1,

Fig. 3 einen Längsschnitt durch eine Spritzgußform und

Fig. 4 einen Schnitt IV-IV nach Fig. 3.

- 5 -

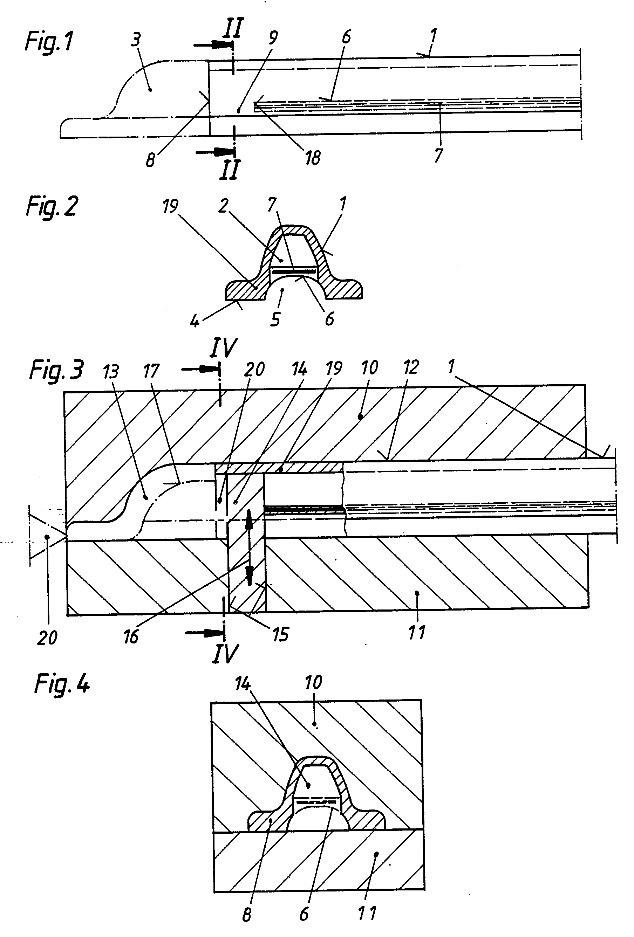

In Fig. 1 und 2 ist eine Kunststoff-Profilleiste 1 gezeigt, die eine in Profillängsrichtung durchlaufende Hohlkammer 2 aufweist. Die Kunststoff-Profilleiste 1 ist an den Enden mit daran angespritzten Endstücken 3 bestückt, von denen in Fig. 1 lediglich eines mit strichpunktierten Linien dargestellt ist.

Wie insbesondere die Querschnittsdarstellung nach Fig. 2 zeigt, ist die Rückseite der Profilleiste 1, der sogenannte Leistenboden 4, mit einer mittig angeordneten, in Profillängsrichtung durchlaufenden Rinne 5 ausgebildet. Zwischen der Rinne 5 und der Hohlkammer 2 befindet sich ein, die Hohlkammer 2 zum Leistenboden 4 hin verschließender Steg 6, in dem ein Band 7 aus z.B. Stahl eingelagert ist. Dieser Steg 6 weist eine vom Stirnende 8 der Profilleiste 1 ausgehende und sich über einen axialen Profilleistenbereich erstreckende Ausklinkung 9 auf, die der Breite der Hohlkammer 2 entspricht.

Die in Fig. 3 und 4 gezeigte Spritzgußform weist eine obere Formhälfte 10 und eine untere Formhälfte 11 auf. Zwischen den Formhälften 10 und 11 ist ein Klemmhohlraum 12 und ein Formnest 13 ausgearbeitet. Zwischen dem Klemmhohlraum 12 und dem Formnest 13 befindet sich ein Formkernstück 14, welches einteilig mit der unteren Formhälfte 11 ausgebildet sein kann, bei dem es sich aber auch um einen aus der unteren Formhälfte herausbewegbaren Schieber (vgl. die gestrichelten Linien 15 und den Doppelpfeil 16) handeln kann. Das Formkernstück 14 kann auch, wie strichpunktiert angedeutet, einen Kernfortsatz 17 zwecks Ausbildung eines Hohlraums im Endstück 3 aufweisen.

Zum Anspritzen eines Endstücks 3 an eine Profilleiste 1, wird letztere in den Klemmhohlraum 12 der Spritzgußform eingeschoben, und zwar bis zum Auftreffen des ausgeklinkten Stirnendes 18 des Steges 6 auf das als Anschlag und gleichzeitig als Verschlußelement für die Hohlkammer 2 dienende Formkernstücks 14. Das Formkernstück 14 füllt hiernach exakt die durch die Hohlkammer 2 und die Ausklinkung gebildete Profilleistenöffnung aus und wirkt beim Schließen der Formhälften 10 und 11 als Widerlager, so daß zufolge der Klemmkraft der Formhälften auf die Profilleiste 1 deren Wandung 19 gegen das Formkernstück 14 gepreßt und die Profilleistenöffnung hermetisch abgedichtet wird. Hiernach wird mittels des Spritzwerkzeuges 20 eine Spritzgußmasse mit relativ hohem Spritzdruck in das Formnest 13 des Spritzgußwerkzeuges eingespritzt, wobei es ggf. unter Zusatz herkömmlicher Hilfsmittel zur homogenen Verschmelzung mit dem Stirnende 8 der Profilleiste 1 und zur Bildung eines Endstücks 3 kommt. Wie Fig. 3 noch erkennen läßt, ist das Formstück 14 gegenüber dem freien Stirnende 8 ins Hohlkammerinnere hinein versetzt, wodurch eine Verbindung des Endstücks 3 sowohl mit dem Stirnende 8 als auch mit Innenwandungsbereichen 20 der Profilleiste erfolgen kann.

Es versteht sich, daß die dargestellte Querschnittsform der Profilleiste 1 mannigfach abwandelbar ist und daß die vorliegende Erfindung auch mit Vorteil bei Profilleisten mit anderen, beliebigen Querschnittsformen anwendbar ist, was natürlich auch in bezug auf die Gestaltung und Formgebung der Endstücke 3 gilt.

H 1063                                                      01.06.1984 Pom/Eng.

Patentansprüche

1. Verfahren zum Anbringen von Endstücken an Kunststoff-Profilleisten mit mindestens einer in Profillängsrichtung durchlaufenden Hohlkammer, bei dem die Endstücke an die Profilleistenenden innerhalb einer die Endbereiche der Profilleisten aufnehmenden Kunststoff-Spritzgußform nach dem endseitigen Verschließen der Hohlkammer durch Spritzgießen angeformt werden, dadurch gekennzeichnet, daß die Profilleisten mit offener Hohlkammer in die Spritzgußform bis zum Anschlag ihrer Stirnenden an ein in der Spritzgußform angeordnetes Verschlußelement für die Hohlkammer eingeschoben und hiernach an die Stirnenden der Profilleisten die Endstücke angespritzt werden.

2. Verfahren nach Anspruch 1, dadurch gekennzeichnet, daß die die Hohlkammer umschließende Wandung an den Endbereichen der Profilleisten vor dem Einschieben derselben in die Spritzgußform von der Rückseite der Profilleisten her in einer der Hohlkammer entsprechenden Breite ausgeklinkt wird und daß ein Verschlußelement verwendet wird, dessen Querschnitt dem durch die Hohlkammer und die Ausklinkung gebildeten Öffnungsquerschnitt der Profilleisten entspricht.

3. Verfahren nach Anspruch 1 und 2, dadurch gekennzeichnet, daß die Ausklinkung derart weit in axialer Richtung vorgenommen wird, daß das Verschlußelement darin eine gegenüber dem jeweiligen Stirnende der Leisten geringfügig nach innen versetzte Aufnahme findet.

4. Verfahren nach Anspruch 2 oder 3, dadurch gekennzeichnet, daß die die Hohlkammer umschließende Wandung jeder Leiste gegen das im Leistenendbereich angeordnete Verschlußelement gepreßt und hiernach das Endstück angespritzt wird.

5. Vorrichtung zum Durchführen des Verfahrens nach den Ansprüchen 1 bis 4, bestehend aus einer Spritzgußform mit zwei Formhälften, zwischen denen ein Klemmhohlraum zum Einspannen des Endbereichs einer Hohlprofilleiste und ein Formnest zum Anspritzen eines Endstücks an ein freies Leistenende ausgearbeitet sind, dadurch gekennzeichnet, daß zwischen dem Klemmhohlraum und dem Formnest ein Formkernstück angeordnet ist, welches einen Anschlag für das Leistenende und gleichzeitig ein Verschlußelement für die Hohlkammer der Hohlprofilleiste bildet.

6. Vorrichtung nach Anspruch 5, dadurch gekennzeichnet, daß das Formkernstück die Hohlkammer am Hohlprofilleistenende und den dort ausgeklinkten Wandungsbereich ausfüllende Abmessungen aufweist.

0164082

Fig.1

Fig.2

Fig.3

Fig.4